# DEMANDE DE BREVET EUROPEEN

(11) **EP 1 452 840 A1**
(43) Date de publication de la demande: **01.09.2004**
(21) Numéro de dépôt: 04290400.3
(22) Date de dépôt: 13.02.2004
(51) Int. Cl.: G01F 23/26

(54) **Jauge de mesure de niveau de carburant dans un réservoir et système de mesure de la masse de combustible dans ce réservoir**

(30) Priorité: 26.02.2003 FR 0302345
(71) Demandeur: Intertechnique, 78373 Plaisir Cedex (FR)
(72) Inventeur: Hauzeray, Sylvain, c/o Intertechnique, 78373 Plaisir Cedex (FR)
(74) Mandataire: Regi, François-Xavier

(57) **Abrégé**

La jauge comporte un tube interne (14) et un tube externe (12) concentriques en matériau isolant, et deux condensateurs formés chacun d'un jeu d'électrodes, chaque jeu ayant au moins un couple de deux électrodes en forme de bande (16a-18a ; 16b-18b) s'étendant le long de la jauge, placées face à face sur les parois en regard du tube interne et du tube externe.

## Description

L'invention concerne le domaine du jaugeage du carburant contenu dans un ou des réservoirs d'un véhicule et notamment d'un aéronef. Elle concerne notamment les jauges destinées à être disposées dans un réservoir pour mesurer le niveau ou la hauteur de carburant liquide dans le réservoir et les systèmes de mesure incorporant de telles jauges.

Notamment dans un aéronef, il est indispensable de connaître à tout moment la quantité et surtout la masse résiduelle de carburant contenue dans le réservoir ou les réservoirs.

A l'heure actuelle, on utilise surtout un système comportant une jauge capacitive ou plus fréquemment plusieurs jauges réparties dans le réservoir ou chaque réservoir et aptes à fournir un signal électrique représentatif de la longueur sur laquelle la jauge est immergée dans le carburant. Ainsi, chaque jauge permet de mesurer le niveau de la surface libre du carburant. Les jauges sont reliées à un calculateur qui reçoit également les signaux provenant d'autres capteurs, donnant une information sur la masse spécifique, la constante diélectrique et/ou la température du carburant, ce qui permet de connaître la masse résiduelle avec une précision élevée.

L'invention concerne plus particulièrement les jauges capacitives de carburant comportant deux tubes concentriques métalliques ou métallisées constituant un condensateur dont la capacité varie en fonction de la longueur de jauge plongée dans le carburant.

Des raisons de sécurité rendent souvent une redondance de mesure nécessaire. Pour cette raison, les systèmes de mesure actuels montés sur les aéronefs utilisent deux jeux de jauges, indépendants l'un de l'autre. Ainsi un défaut intervenant sur un jeu ne prive pas l'équipage d'informations sur la masse de combustible disponible.

Le doublement du nombre de jauges augmente la masse ce qui, sur un avion, constitue un facteur défavorable. La présente invention vise notamment à fournir une jauge assurant une redondance de façon simple et économique, conduisant à un système de mesure plus léger que les systèmes antérieurement connus assurant le même niveau de redondance.

Dans ce but, l'invention propose notamment une jauge comportant un tube interne et un tube externe concentriques en matériau isolant, et deux condensateurs formés chacun d'un jeu d'électrodes, chaque jeu étant constitué chacun d'au moins un couple de deux électrodes en forme de bande s'étendant le long de la jauge, placées face à face sur les parois en regard du tube interne et du tube externe.

En général, les bandes seront disposées longitudinalement, parallèlement à l'axe commun des tubes. Toutefois, rien n'interdit de les disposer en hélice, bien que cette solution ne présente en général pas d'avantage. Les bandes occuperont en général le même secteur angulaire et les deux jeux seront identiques.

Au lieu d'utiliser des condensateurs constitués chacun de deux bandes placées face à face, il est possible de constituer chaque condensateur de quatre bandes, deux par deux diamétralement opposées sur la jauge ; mais cette solution ne fournit généralement pas un avantage justifiant l'accroissement de complexité.

La jauge est équipée de moyens permettant de la relier à un organe central de mesure permettant d'exciter et d'exploiter le signal de sortie de chaque condensateur. Dans un mode avantageux de réalisation, le tube externe porte un boîtier de connexion blindé, mis à la masse, contenant, pour chaque jeu, un connecteur de liaison par une ligne basse impédance avec une électrode d'excitation du jeu et un connecteur de liaison par une ligne haute impédance à l'autre électrode du jeu.

L'invention propose également un système de mesure de la quantité de carburant dans au moins un réservoir, comprenant au moins une jauge suivant l'une quelconque des revendications précédentes, muni de deux ensembles indépendants ayant chacun des moyens d'excitation en courant alternatif d'un des condensateurs par alimentation d'une électrode du jeu correspondant et une voie de mesure des signaux provenant de l'autre électrode de ce jeu.

La solution ci-dessus semblait a priori à rejeter, du fait qu'on pouvait craindre des interférences entre les deux voies de mesure associées chacune à un jeu d'électrodes. Mais, en fait, il est apparu possible d'écarter le risque d'interférences par des moyens de découplage. Ces moyens peuvent être de nature matérielle et prévus sur la jauge sous forme de bandes métalliques de blindage ou de garde mises à la masse, portées par les faces en regard des tubes et séparant les deux jeux. Les moyens de découplage peuvent également être constitués par des modes de mesure des capacités, par exemple utilisant deux fréquences différentes d'excitation des capacités, permettant une discrimination des signaux par des filtres, ou utilisant une excitation par une séquence de signaux électriques suivant un motif répétitif particulier pour chaque voie, associée à un traitement du signal par auto corrélation. Cette seconde solution permet d'éviter ou de réduire des bandes de garde sur les tubes, ou l'un d'entre eux.

Les caractéristiques ci-dessus ainsi que d'autres apparaîtront mieux à la lecture de la description qui suit de modes particulier de réalisation, donnés à titre d'exemples non limitatifs. La description se réfère aux dessins qui l'accompagnent, dans lesquels :
- La figure 1 est une vue schématique en perspective d'une jauge conforme à un mode de réalisation de l'invention ;
- la figure 2 est une vue en coupe transversale de la jauge de la figure 1 ;
- la figure 3 montre un mode de connexion possible des conducteurs associés à l'un des condensateurs portés par la jauge de la figure 1 ;
- la figure 4 est un schéma de principe d'un système utilisant des jauges du genre montré en figure 1.

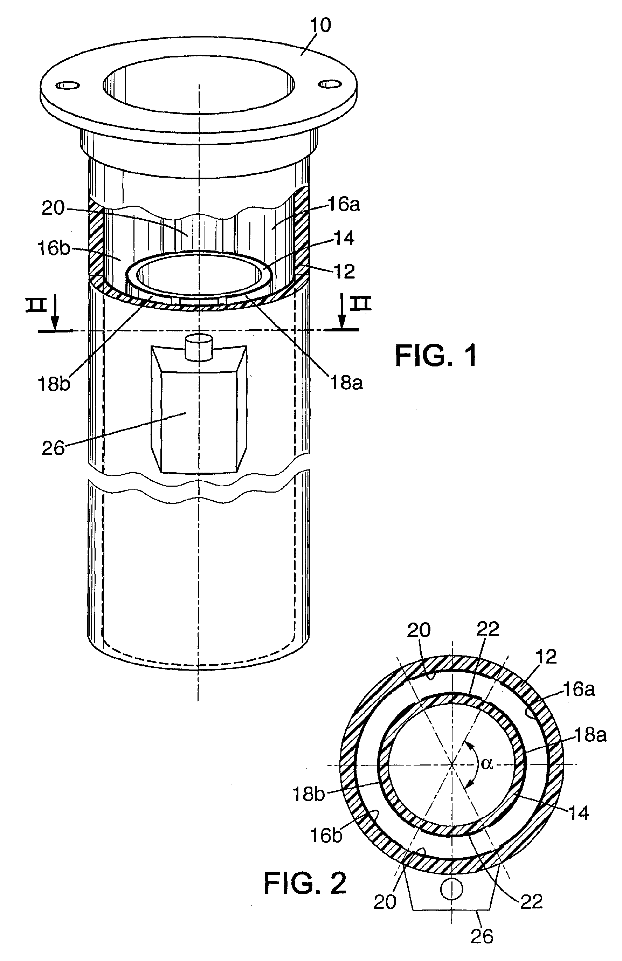

La jauge dont la constitution de principe est montrée en figure 1 comporte une embase 10 de montage sur la partie haute d'un réservoir et deux tubes concentriques 12 et 14 portés par l'embase. Les tubes sont en matériau isolant, par exemple en résine renforcée par de la fibre de verre. Sur la face interne du tube extérieur 12 sont prévus deux bandes métalliques longitudinales 16a et 16b, diamétralement opposées et occupant chacune un même secteur angulaire α. Toutefois les deux bandes pourraient occuper des secteurs n'ayant pas la même valeur. Ces bandes peuvent être constituées par dépôt de métal sur le tube 12. La face externe du tube intérieur 14 porte des bandes conductrices 18a et 18b placées en face des bandes 16a et 16b, occupant généralement le même secteur angulaire α. Dans chaque paire de bandes 16a-18a et 16b-18b, l'intervalle entre les bandes est le même et il est suffisamment faible pour que les bandes constituent un condensateur de capacité suffisante pour être mesurable. Le diélectrique entre les bandes constituant les électrodes est constitué par de l'air dans la partie émergée de la jauge, par le carburant dans la partie immergée. En conséquence, la capacité de chaque condensateur constitué par deux bandes opposées varie en fonction d'une part de la hauteur de carburant dans le réservoir où est placée la sonde, d'autre part en fonction de la constante diélectrique du carburant.

Dans le cas illustré sur les figures 1 et 2, chacun des tubes porte des bandes de garde reliées à la masse, séparant les deux bandes portées par le tube et permettant de les découpler. Les deux bandes 20 sur la paroi interne du tube extérieur 12 séparent les bandes 16a et 16b. les bandes de garde 22 sur le tube intérieur 14 séparent les bandes 18a et 18b.

La jauge est munie d'un boîtier de connexion permettant de la raccorder électriquement à un organe central de mesure.

Dans le cas représenté sur les figures 1 à 3, le boîtier 26, qui peut être métallique, est fixé sur le tube extérieur 12. Il est fixé, par exemple par des rivets 26, qui peuvent assurer également sa liaison avec une ou les bandes de garde 20.

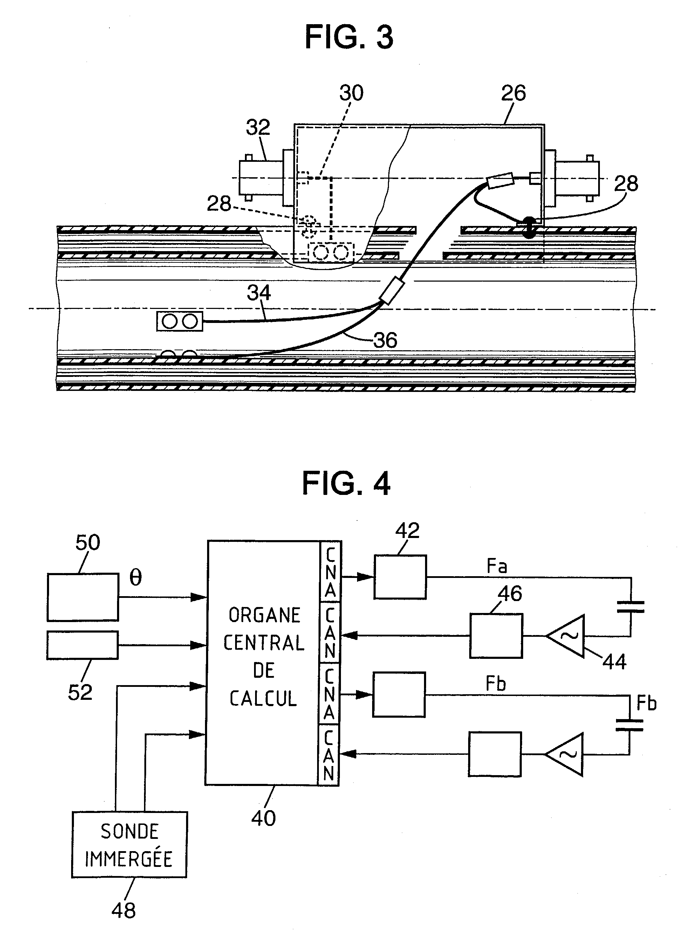

La figure 3 montre les liaisons vers un seul des deux jeux d'électrodes, par exemple 16a et 18a. Un câble de liaison à basse impédance 30, qui traverse le boîtier par un connecteur 32, permet d'amener des signaux d'excitation, généralement constitués par un signal sinusoïdal, à l'électrode 16a portée par le tube externe.

Le signal de mesure prélevé sur la bande 18a portée par le tube interne est amené à un organe central de mesure par le conducteur central 34 d'un câble coaxial dont le blindage est mis à la masse par un conducteur 36. On réalise ainsi une liaison à haute impédance blindée avec l'organe central de mesure, ce qui réduit les perturbations.

Une constitution de principe d'un système de mesure, dans le cas où il y a une seule jauge mouillée sur une longueur variable en fonction de la hauteur de carburant, est donnée en figure 4.
L'organe central de mesure 40 comporte un calculateur numérique 40. Ce calculateur reçoit des signaux de diverses origines lui permettant de déterminer la masse de combustible résiduel dans un réservoir où plonge la sonde. Pour assurer une redondance, l'organe central coopère avec deux boucles comportant l'une le condensateur constitué par les électrodes 16a et 18a, l'autre le condensateur constitué par les électrodes 16b et 18b. Chacune des boucles comporte un oscillateur 42 commandé par le calculateur à travers un convertisseur numérique-analogique et fournissant un signal alternatif d'amplitude constante d'excitation par une liaison à basse impédance. Le signal prélevé par une liaison à haute impédance est amené à un amplificateur de gains connu 44, d'où il passe à un démodulateur 46, pouvant être associé à un filtre centré sur la fréquence d'excitation Fa. Le signal démodulé est adressé à l'organe central de calcul par l'intermédiaire d'un convertisseur analogique-numérique.

La seconde boucle est identique à la première mais travaille éventuellement à une fréquence Fb différente, ce qui permet d'écarter les conséquences de la diaphonie entre les deux condensateurs, notamment en l'absence de bandes de garde 20 et 22 sur les tubes.

Le signal de sortie de chaque boucle est constitué par une tension alternative ayant une valeur proportionnelle à la hauteur mouillée de la jauge. Le coefficient de proportionnalité peut être déterminé en associant l'organe central à une sonde 48 de même constitution que la jauge, placée de façon à être immergée en permanence dans le même carburant que celui qui mouille la jauge. Des capteurs supplémentaires, tel qu'un capteur 50 de la température θ du carburant et un organe d'entrée 52 des caractéristiques du carburant permettent de passer du volume à la masse.

Comme il a été indiqué plus haut, le découplage entre les mesures à l'aide des deux boucles peut être également assuré en utilisant non pas une excitation constituée par une tension alternative permanente, mais en utilisant, sur les deux boucles, deux séquences temporelles différentes.

Une autocorrélation effectuée par l'organe central permet alors d'écarter, du signal reçu d'une boucle, la contribution provenant de l'autre boucle.

Divers types de séquences peuvent être utilisés. Une solution particulière consiste à adopter une séquence fournie par un générateur pseudo-aléatoire, avec une période de répétition qui est de plusieurs ordres de grandeur plus longue que la durée des impulsions électriques ou électromagnétique parasites à craindre.

## Revendications

1. Jauge comportant un tube interne (14) et un tube externe (12) concentriques en matériau isolant, et deux condensateurs formés chacun d'un jeu d'électrodes, chaque jeu ayant au moins un couple de deux électrodes en forme de bande (16a-18a ; 16b-18b) s'étendant le long de la jauge, placées face à face sur les parois en regard du tube interne et du tube externe.

2. Jauge suivant la revendication 1, **caractérisée en ce que** les bandes sont disposées longitudinalement, parallèlement à l'axe du tube, ou en hélice.

3. Jauge suivant la revendication 1 ou 2, **caractérisée en ce que** les bandes ont la même valeur de secteur angulaire et les deux jeux sont identiques.

4. Jauge suivant la revendication 1, 2 ou 3, **caractérisée en ce que** chaque jeu est constitué uniquement de deux bandes placées face à face.

5. Jauge suivant l'une quelconque des revendications 1 à 4, **caractérisée en ce qu'**elle est munie de moyens de découplage des deux jeux.

6. Jauge suivant l'une quelconque des revendications 1 à 4, **caractérisée en ce que** l'un au moins des tubes porte des bandes métalliques de blindage ou de garde (20, 22) mises à la masse, portées par les faces en regard des tubes et séparant les deux jeux.

7. Jauge suivant l'une quelconque des revendications 1 à 4, **caractérisée en ce que** le tube externe porte un boîtier (26) de connexion blindé, mis à la masse, contenant, pour chaque condensateur, un connecteur (32) de liaison par une ligne basse impédance avec une électrode d'excitation du jeu et un connecteur de liaison par une ligne haute impédance à l'autre électrode du jeu.

8. Système de mesure de la quantité de carburant dans au moins un réservoir, comprenant au moins une jauge suivant l'une quelconque des revendications précédentes, et un organe central de mesure (40) muni de deux ensembles indépendants ayant chacun des moyens d'excitation en courant alternatif d'un des condensateurs par alimentation d'une électrode du jeu correspondant et une voie de mesure des signaux provenant de l'autre électrode du jeu.

9. Système suivant la revendication 8, **caractérisé en ce qu'**il assure un découplage entre les mesures en utilisant deux fréquences différentes d'excitation des condensateurs, et une discrimination des signaux par des filtres, ou en utilisant une excitation par une séquence de signaux électriques suivant un motif répétitif particulier pour chaque voie, associée à un traitement du signal de mesure par auto- corrélation.
